# FASCICULE DE BREVET EUROPEEN

(11) **EP 1 449 090 B1**
(45) Date de publication et mention de la délivrance du brevet: **21.09.2011**
(21) Numéro de dépôt: 02803349.6
(22) Date de dépôt: 15.11.2002
(51) Int. Cl.: G06F 12/02

(54) **ARCHITECTURE D'UN CIRCUIT INTEGRE POUR CARTE A PUCE ET PROCEDE D'ALLOCATION MEMOIRE ASSOCIE**
INTEGRIERTE SCHALTUNGSARCHITEKTUR FÜR EINE CHIPKARTE UND DAMIT ZUSAMMENHÄNGENDES SPEICHERZUTEILUNGSVERFAHREN
INTEGRATED CIRCUIT ARCHITECTURE FOR SMART CARD AND RELATED STORAGE ALLOCATING METHOD

(30) Priorité: 19.11.2001 EP 01204405
(43) Date de publication de la demande: 25.08.2004
(73) Titulaire: EM Microelectronic-Marin SA, 2074 Marin (CH)
(72) Inventeur: WALTER, Fabrice, CH-2074 Marin (CH); YAZIGI, Raja, CH-2072 St-Blaise (CH)
(74) Mandataire: Vigand, Philippe
(86) Numéro de dépôt international: PCT/EP2002/010486
(87) Numéro de publication internationale: WO 2003/044669

(56) Documents cités:
- EP-A- 0 833 251
- WO-A-01/16873
- WO-A-99/54824

## Description

La présente invention concerne une architecture d'un circuit intégré notamment pour cartes à puce et un procédé d'allocation mémoire associé.

Le circuit intégré selon l'invention comprend en particulier une unité centrale, une mémoire non volatile susceptible de contenir du code machine et des données et unité de gestion mémoire. Le code machine correspond aux instructions de l'unité centrale et les données correspondent à d'autres informations, comme par exemple, des constantes ou des variables.

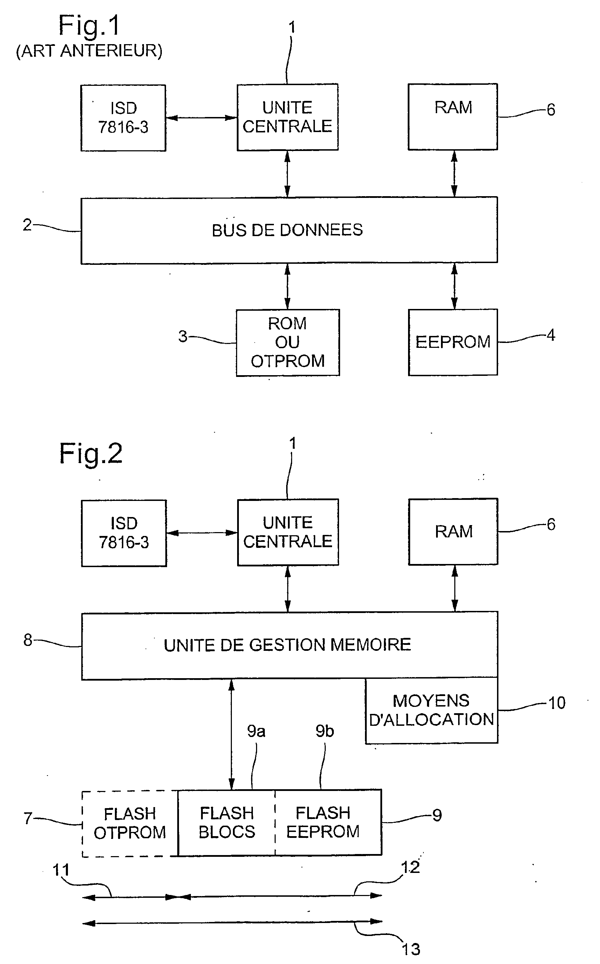

Dans le domaine des cartes à puce, un circuit intégré classique est représenté à la figure 1. Ce circuit comprend une unité centrale 1 reliée par un bus de données 2 aux différentes mémoires présentes sur le circuit.

Le circuit contient en particulier une mémoire morte 3 du type "Read Only Memory" (ROM) permettant de contenir les instructions pour l'unité centrale, c'est-à-dire, le code machine, et une mémoire non volatile 4 du type "Electrically Erasable Programmable Read Only Memory" (EEPROM) permettant de contenir des données.

Ce circuit est susceptible de comprendre également d'autres éléments comme par exemple une mémoire vive 6 du type "Random Access Memory" (RAM). Il est également connu d'utiliser une mémoire non volatile du type "One Time Programmable Read Only Memory" (OTPROM), pour stocker le système d'exploitation de la carte, cette mémoire OTPROM pouvant éventuellement remplacer la ROM.

Une architecture de circuit intégré telle que sus-décrite présente néanmoins quelques inconvénients. Les applications dans le domaine des cartes à puce sont devenues très nombreuses et les besoins mémoires qu'elles requièrent sont très différents d'un client à l'autre.

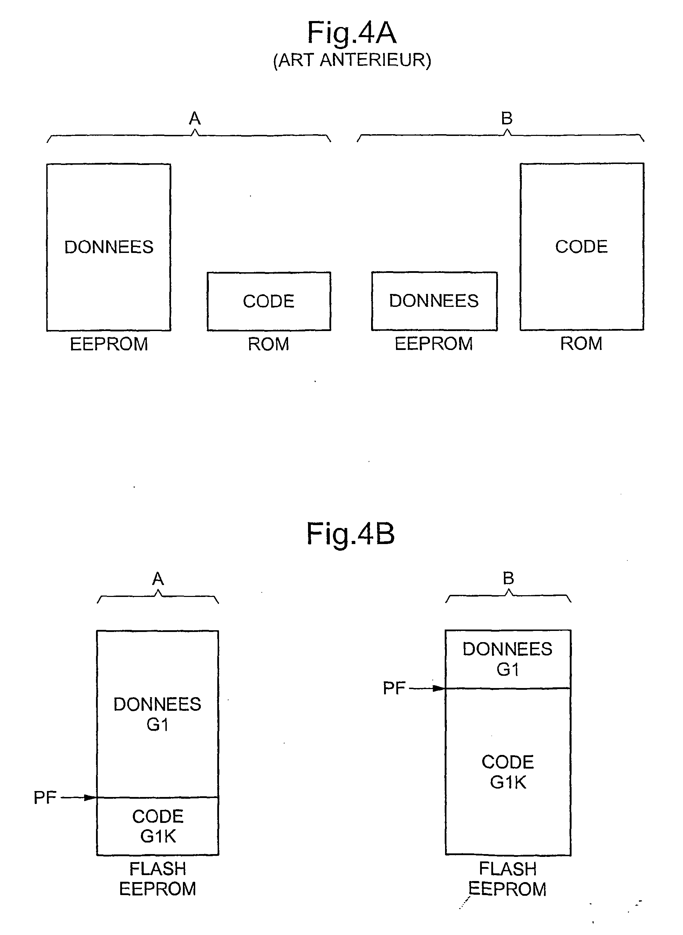

La figure 4A est un exemple des besoins mémoires nécessaires pour deux groupes d'applications différents A et B.

Le premier groupe d'applications A nécessite l'allocation d'un espace mémoire en EEPROM pour les données, par exemple de 128 Koctets, et l'allocation d'un espace mémoire en ROM pour le code machine, par exemple de 64 Koctets.

Le deuxième groupe d'applications B nécessite l'allocation d'un espace mémoire différent en EEPROM pour les données, par exemple de 64 Koctets, et l'allocation d'un espace mémoire également différent en ROM pour le code machine, par exemple de 128 Koctets.

Selon cet exemple, avec une architecture de circuit telle que présentée à la figure 1, il est nécessaire de disposer de deux circuits différents permettant de convenir aux besoins mémoires des deux groupes d'applications A et B.

D'une manière plus générale, chaque client dispose de groupes d'applications différents, ce qui nécessite de prévoir une large gamme de circuits pour pouvoir satisfaire les besoins mémoires dans la mesure du possible chaque groupe d'applications de chaque client.

Pour des raisons évidentes de coût d'études et de développement, une telle solution n'est pas optimale et peu rentable dans un domaine aussi compétitif que celui des cartes à puce.

On connait également du document WO 99/54824 un circuit intégré, notamment pour cartes à puce, comprenant une unité centrale, une mémoire non volatile susceptible de contenir du code machine et des données. Ce circuit comprend en outre une unité de gestion mémoire qui comprend des moyens d'allocation programmables pour allouer au moins un premier et un deuxième espaces de ladite mémoire non volatile définis pour contenir, respectivement, ledit code machine et lesdites données.

On connait aussi les documents W001116873 et EP0833251 décrivant respectivement une méthode de management d'une mémoire pour en augmenter la durée de vie et un système et un procédé de correction de mémoire reposant sur la programmation d'une carte à puce.

Une idée consisterait à prévoir des mémoires ROM et EEPROM suffisamment grandes pour pouvoir contenir respectivement le code machine et les données, quels que soit les besoins mémoires du client. Cette solution n'est pas rentable en raison de la place nécessitée par ces mémoires sur le circuit et n'est pas satisfaisante en raison du faible taux moyen d'occupation mémoire selon les différents clients. L'invention est définie par les revendications annexées.

L'architecture du circuit selon l'invention est remarquable en ce qu'elle permet de réduire de manière significative les coûts de fabrication du circuit, tout en réduisant la place occupée par l'espace mémoire sur le circuit, ainsi qu'en améliorant le taux moyen d'occupation de cet espace.

Le circuit intégré selon l'invention, outre les caractéristiques définies en préambule, est caractérisé en ce que l'unité de gestion mémoire comprend des moyens d'allocation programmables pour allouer au moins un premier et un deuxième espaces de la mémoire non volatile définis pour contenir respectivement le code machine et les données.

De préférence, une mémoire FLASH EEPROM est utilisée. Ce type de mémoire est avantageuse en ce qu'elle prend peu de place sur le circuit, en ce qu'elle permet de disposer d'une large plage de granularité mémoire pour les espaces mémoires allouables, et aussi en ce que son coût est réduit.

L'invention concerne également le procédé d'allocation de cette mémoire non volatile.

L'invention va être expliquée ci-dessous en détail pour un mode d'exécution donné uniquement à titre d'exemple, cette exécution étant illustrée par les dessins annexés dans lesquels :
La figure 1,déjà décrite, représente la structure classique d'un circuit intégré sur une carte à puces ;
La figure 2 représente une structure de circuit intégré selon l'invention ;
La figure 3A représente le procédé d'allocation mémoire de l'invention selon un premier mode d'allocation ;
La figure 3B représente la configuration de la mémoire selon ce premier mode d'allocation :
La figure 3C représente la configuration de la mémoire selon un deuxième mode d'allocation ;
La figure 4A, déjà décrite, représente un exemple d'allocation mémoire selon l'art antérieur pour des besoins mémoires différents.
La figure 4B. représente l'allocation mémoire selon l'invention de l'exemple présenté à la figure 4A.
La figure 2 représente une structure de circuit intégré pour cartes à puce selon l'invention.

Le circuit intégré selon l'invention comprend notamment une unité centrale 1 reliée à une unité de gestion mémoire 8 qui permet de gérer les différentes mémoires. Le circuit est susceptible de comprendre une mémoire vive 6 du type RAM et une mémoire non volatile 7 du type OTPROM pour contenir le système d'exploitation.

Le circuit comprend en plus des éléments susmentionnés, une mémoire non volatile 9 susceptible de contenir du code machine et des données. Cette mémoire non volatile 9 est préférentiellement une mémoire du type FLASH EEPROM, c'est-à-dire une mémoire EEPROM à temps de programmation fortement réduit. Les doubles flèches 11, 12 et 13 représentent respectivement l'espace code minimum, l'espace données maximum et l'espace code maximum. L'espace code 9a, hormis l'espace 7 éventuellement réservé au système d'exploitation, et l'espace données 9b sont donc de taille variable dans les limites sus définies.

Ce type de mémoire FLASH permet de définir une granularité mémoire allant de l'octet à plusieurs kilos octets. Il est important de noter que la mémoire est préalablement décomposée en un certain nombre de blocs d'une taille prédéfinie, par exemple un octet, définissant la granularité la plus fine ou granularité nominale.

Il est possible de définir, pour une zone mémoire déterminée, une granularité multiple de cette granularité nominale, cette zone mémoire étant alors décomposée en blocs d'une taille correspondante à la granularité multiple, par exemple un kilo octet. Une telle granularité multiple peut être notamment obtenue en reliant des blocs de taille correspondant fi la granularité nominale, au moyen de l'unité de gestion mémoire.

Les opérations d'effacement dans cette zone sont alors effectuées sur l'intégralité d'un bloc de taille correspondant à la granularité multiple. En revanche, il est possible d'effectuer des opérations d'écriture sur un bloc de taille correspondant à la granularité nominale.

L'unité de gestion mémoire 8 comprend des moyens d'allocation programmables 10 de la mémoire FLASH 9. Ces moyens d'allocation programmables peuvent être notamment des moyens pour reconfigurer la cartographie mémoire en modifiant la mise en correspondance entre le code machine et les données.

Selon un mode préféré de réalisation du circuit, les moyens d'allocation programmables 10 sont formés par un logiciel d'allocation.

On entend par logiciel d'allocation, un programme permettant d'envoyer des instructions à l'unité centrale 1, suivant les informations qui lui sont fournies, pour allouer les différents espaces mémoires. Ce programme permet notamment de contrôler si l'espace mémoire global disponible est suffisant, et dans ce cas, de définir, par exemple au moyen de pointeurs, le commencement et la fin de l'espace mémoire réservé pour le code, et celui réservé pour les données.

Suivant l'espace mémoire nécessaire pour contenir le code et les données, des premier et deuxième espace mémoire ayant chacun la taille nécessaire sont définis, et le logiciel d'allocation 10 est programmé en conséquence. Ainsi, la mémoire 9 comprend un espace code et un espace données correspondant aux besoins des applications du client. Cette solution est avantageuse en ce qu'elle est utilisable par le client lui-même.

Selon une variante de ce mode préféré, le logiciel est configurable dynamiquement en réponse à une définition dynamique des espaces mémoires, code et données, à allouer. Lors de l'installation des applications d'un client donné, le logiciel d'allocation évalue les espaces mémoires nécessaires pour contenir le code et les données, et alloue suivant le mode d'allocation défini les espaces mémoires correspondants.

Comme il a été mentionné auparavant, la mémoire FLASH est définie avec une granularité nominale. Il est prévu de pouvoir programmer le logiciel d'allocation de manière à définir pour un espace mémoire à allouer une granularité multiple de la granularité nominale, de façon à accélérer notamment les opérations d'effacement ou de programmation.

Par exemple, l'espace données est alloué avec la granularité la plus fine, c'est-à-dire la granularité nominale, pour permettre des opérations d'écriture ou d'effacement précises. Et l'espace code est alloué avec une granularité plus large, par exemple mille fois la granularité nominale, pour permettre des opérations d'écriture ou d'effacement rapides.

L'invention concerne également le procédé d'allocation de la mémoire non volatile, procédé qui dépend de la programmation des moyens d'allocation programmables de l'unité de gestion.

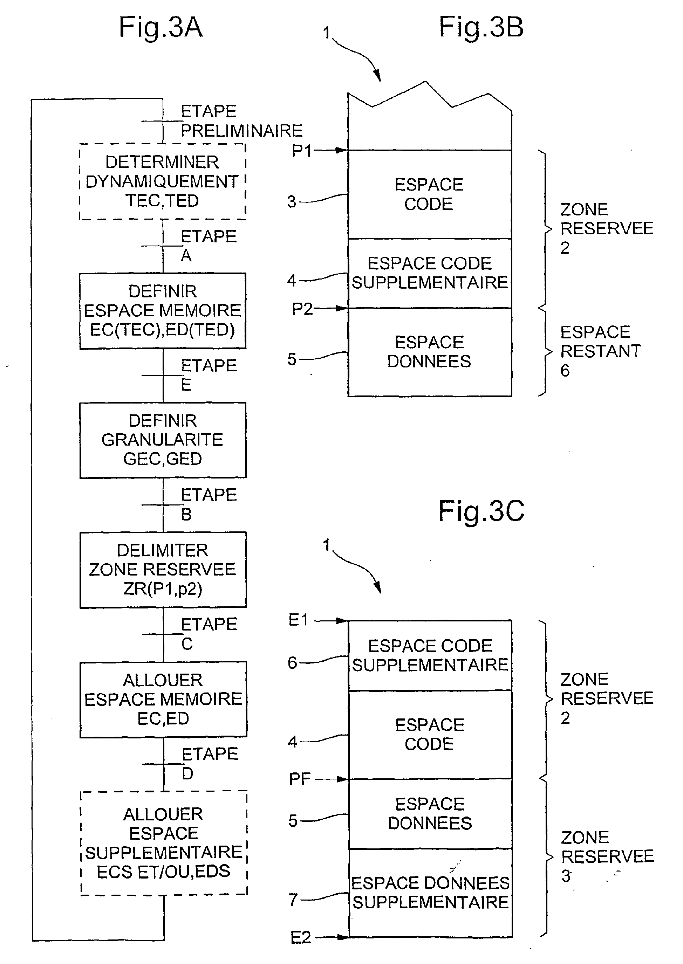

La figure 3A représente un procédé d'allocation de la mémoire non volatile selon un premier mode d'allocation.

Selon les besoins des clients, lors de l'étape (a), il est défini par la programmation des moyens d'allocation, au moins deux espaces mémoires, pour contenir respectivement du code machine et des données, appelés espace code EC et espace données ED, ayant chacun une taille déterminée TEC et TED.

De plus en plus dans un souci de secret vis-à-vis des fabricants de cartes, les clients désirent procéder eux-mêmes à l'installation de leurs application, sans se préoccuper des besoins mémoires qu'elles requièrent. C'est pourquoi de préférence, des moyens d'allocation dynamique sont prévus. On entend par allocation dynamique, la capacité du logiciel à évaluer lors de l'installation d'une application les besoins mémoires requis, code et données, par cette dernière.

Dans le cas de l'utilisation de moyens d'allocation dynamique, la détermination des tailles de l'espace code TEC et de l'espace données TED se fait lors d'une étape préliminaire pendant laquelle ces moyens déterminent dynamiquement les tailles nécessaires.

L'étape (b) consiste à délimiter une zone mémoire réservée ZR ayant une taille supérieure ou égale à la taille déterminée de l'espace code TEC ou de l'espace données TED. Ainsi l'espace mémoire global de la mémoire non volatile est découpée en deux, la zone réservée ZR et l'espace mémoire en dehors de cette zone réservée. Pour délimiter cette zone réservée, deux points mémoires P1 et P2 sont définis.

L'étape (c) consiste à allouer l'espace code EC dans la zone mémoire réservée ZR et à allouer l'espace données ED dans l'espace mémoire restant, ou inversement.

Il est à noter que la taille de la zone réservée ZR peut être supérieure à la taille de l'espace code TEC défini à l'étape (a), ou de l'espace données TED suivant le cas. Cela laisse la possibilité de pouvoir allouer un espace code ECS, ou données EDS, supplémentaire dans la zone réservée non allouée

L'étape (d) consiste à allouer cet espace code ou données supplémentaire, ECS ou EDS dans la zone réservée non allouée, pour étendre la capacité mémoire utilisée pour le code machine ou les données.

Il est également possible d'allouer un espace code supplémentaire et un espace données supplémentaire, ECS et EDS, respectivement dans la zone réservée non allouée et dans l'espace mémoire restant non alloué, ou inversement. On pourra prévoir pour l'allocation de ces espaces supplémentaires comme pour l'allocation des espaces code et données, une étape de détermination dynamique des tailles (étape préliminaire) et une étape de définition des espaces supplémentaires (étape a), non schématisées à la figure 3A.

Cette solution est avantageuse en ce qu'elle permet de pouvoir étendre la capacité mémoire de l'espace code ou donnée sans avoir à redéfinir l'ensemble de l'allocation de la mémoire. Cela est particulièrement intéressant lors de la mise à jour de certaines applications, ou lors de l'ajout d'une nouvelle application.

Dans le cas de l'utilisation d'une mémoire volatile du type FLASH EEPROM, comme mémoire pour contenir le code machine et les données, il est prévu une étape supplémentaire (e) entre les étapes (a) et (b). La mémoire FLASH étant définie avec une granularité nominale déterminée, l'étape (e) consiste à définir une granularité propre, multiple de cette granularité nominale, pour chaque espace mémoire alloué, EC, ED, ECS et EDS.

Dans le cas de la définition d'une granularité multiple, l'unité de gestion mémoire envoie un code généré par les moyens d'allocation à l'unité centrale qui commande la liaison de blocs de taille correspondant à la granularité nominale de manière à former des blocs de taille correspondant à la granularité multiple dans l'espace mémoire à allouer.

La figure 3B représente la configuration de la mémoire selon ce premier mode d'allocation.

Dans la mémoire non volatile 1, une zone réservée 2 est délimitée par les points mémoires P1 et P2. Cette zone 2 contient, dans cet exemple, l'espace code 3 et un espace code supplémentaire 4, l'espace données 5 étant en dehors de cette zone réservée 2. L'espace code supplémentaire 4 est une possibilité d'extension de l'espace code 3. Il est tout à fait envisageable de délimiter la zone réservée 2 de manière à ce que l'espace code 3 remplisse toute cette zone. Il est également envisageable ne pas utiliser tout l'espace mémoire restant 6 avec l'espace données 5 et de se laisser la possibilité d'allouer un espace données supplémentaire, non représenté.

Il est également possible d'allouer la mémoire en utilisant d'autres modes d'allocation. On donnera ici un exemple suivant un deuxième mode. Ce deuxième mode d'allocation diffère du premier mode pour ce qui concerne les étapes (b) et (c) et (d), les étapes (a), (e) et préliminaire étant inchangées.

Selon ce deuxième mode l'étape (b) consiste à délimiter deux zones mémoires réservées ZR1 et ZR2 ayant chacune une taille supérieure ou égale, respectivement, aux tailles déterminées de l'espace code TEC et de l'espace données TED. Ces zones sont délimitées par la définition d'un point mémoire frontière découpant la mémoire non volatile en ces deux zones ZR1 et ZR2.

L'étape (c) consiste à allouer l'espace code EC et l'espace données ED, respectivement, à l'intérieur des première et deuxième zones réservées ZR1 et ZR2, ou inversement.

Pour le cas où la taille des zones réservées est supérieure à la taille des espaces code et données, l'étape (d) consiste à allouer un espace code supplémentaire et / ou un espace données supplémentaire, respectivement, dans les première et deuxième zones réservées non allouées, ou inversement.

La figure 3C représente la configuration de la mémoire selon ce deuxième mode d'allocation.

La mémoire non volatile 1 est découpé en deux zones réservées 2 et 3 par un point frontière PF. Par exemple, l'espace code 4 est alloué dans la zone réservée 2 à partir du point frontière PF et l'espace données 5 est alloué dans la zone réservée 3 à partir de ce même point frontière PF. Il est également possible d'allouer les espaces codes 4 et données 5 à partir des extrémités E1 et E2 de la mémoire vers le point frontière PF.

Dans cet exemple, la taille des zones réservées 2 et 3 étant supérieure à la taille des espaces code 4 et données 5, des espaces code et données supplémentaires 6 et 7 sont alloués, respectivement, dans les espaces non alloués 8 et 9 des zones réservées 2 et 3.

La figure 4B représente l'allocation mémoire selon l'invention en comparaison de l'allocation mémoire de l'exemple donné à la figure 4A.

Si l'on reprend les deux groupes d'applications A et B avec les mêmes besoins mémoires, il est possible en utilisant, par exemple le procédé d'allocation selon le deuxième mode, de découper la mémoire en deux espaces, l'un recevant le code machine et l'autre les données. Suivant la taille déterminée pour l'espace code et pour l'espace données, le point frontière PF est placé différemment.

Il est également important de noter que le circuit intégré selon l'invention est développé avec une architecture respectant la norme ISO 7816-3.

## Revendications

1. Circuit intégré, notamment pour cartes à puce, comprenant une unité centrale (1), une mémoire non volatile (9) susceptible de contenir du code machine et des données, et une unité de gestion mémoire (8) ladite unité de gestion mémoire comprenant des moyens d'allocation programmables (10) pour allouer au moins un premier (9a) et un deuxième (9b) espaces de ladite mémoire non volatile définis pour contenir, respectivement, ledit code machine et lesdites données, **caractérisé en ce que** ladite mémoire non volatile (9) est décomposable en un nombre déterminé de blocs mémoires d'une même taille définissant une granularité nominale de ladite mémoire et **en ce que** lesdits moyens programmables (10) permettent en outre de définir des granularités différentes, multiples de ladite granularité nominale, pour lesdits premier (9a) et deuxième (9b) espaces de la mémoire.

2. Circuit intégré selon la revendication 1, **caractérisé en ce que** lesdits moyens d'allocation programmables (10) permettent d'allouer dynamiquement lesdits premier (9a) et deuxième (9b) espaces de ladite mémoire non volatile (9) en réponse à une définition dynamique de ces premier et deuxième espaces pour contenir ledit code machine et lesdites données.

3. Procédé d'allocation d'une mémoire non volatile d'un circuit intégré selon la revendication 1, le procédé comprenant les étapes consistant à :
a- définir de premier et deuxième espaces mémoires (EC, ED) destinés à contenir, respectivement, le code et les données, ou inversement, ayant chacun une taille mémoire déterminée ;
b- délimiter au moins une zone mémoire réservée (ZR) ayant une taille supérieure ou égale à la taille (TEC ou TED) mémoire déterminée dudit premier espace mémoire ;
c- allouer lesdits premier et deuxième espaces mémoires, respectivement, à l'intérieur et à l'extérieur de la zone mémoire réservée **caractérisé en ce que** ladite mémoire non volatile a une granularité nominale déterminée, et **en ce qu'**il comprend des étapes supplémentaires consistant à :
e- définir une granularité propre, multiple de ladite granularité nominale, pour chaque espace mémoire alloué.

4. Procédé d'allocation selon la revendication 3, **caractérisé en ce que** l'étape (b) consiste à :
- définir deux points mémoires (P1, P2) délimitant la zone mémoire réservée ayant une taille supérieure ou égale à la taille déterminée dudit premier espace mémoire défini à l'étape (a).

5. Procédé d'allocation selon la revendication 3, **caractérisé en ce que** l'étape (b) consiste à :
- définir un point frontière (PF) découpant la mémoire non volatile en deux délimitant des premières et deuxièmes zones mémoires réservées (ZR1, ZR2) ayant chacune une taille supérieure ou égale, respectivement, aux tailles (TEC, TED) déterminées desdits premier et deuxième espaces mémoires définis à l'étape (a) ; et **en ce que** l'étape (c) consiste à :
- allouer lesdits premier et deuxième espaces mémoires à l'intérieur, respectivement, desdites première et deuxième zones mémoires réservées.

6. Procédé d'allocation selon l'une des revendications 3 à 5, **caractérisé en ce qu'**il comprend une étape supplémentaire consistant à :
d- allouer au moins un troisième espace mémoire supplémentaire (ECS ou EDS), pour contenir du code machine ou des données, dans une zone non allouée de ladite au moins une zone mémoire réservée.

7. Procédé d'allocation selon l'une des revendications 3 à 6, lesdits moyens d'allocation programmables permettant une allocation dynamique, **caractérisé en ce qu'**il comprend une étape préliminaire consistant à :
déterminer dynamiquement la taille mémoire nécessaire pour contenir le code machine et les données.

## Claims

1. Integrated circuit, particularly for a smart card, including a central unit (1), a non volatile memory (9) capable of containing machine code and data, and a memory control unit (8), said memory control unit includes programmable allocation means (10) for allocating at least a defined first (9a) and second (9b) spaces of said non volatile memory defined for containing, respectively, said machine code and said data **characterized in that** said non volatile memory (9) can be broken down into a determined number of memory blocks of the same size defining a nominal granularity for said memory and **in that** said programmable means (10) further enable different granularities to be defined, which are multiples of said nominal granularity, according to said first (9a) and second (9b) spaces of said memory.

2. Integrated circuit according to claim 1, **characterized in that** said programmable allocation means (10) allow said first (9a) and second (9b) spaces of said non volatile memory (9) to be allocated dynamically in response to a dynamic definition of said first and second spaces for containing said machine code and said data.

3. Allocation method for a non volatile memory of an integrated circuit according to claim 1, **characterized in that** the method include the steps of:
a. defining first and second memory spaces (EC, ED) for containing, respectively, the code and the data, or conversely, each having a determined memory size;
b. delimiting at least one reserved memory zone (ZR) having a size greater than or equal to the determined memory size (TED or TED) of said first memory space;
c. allocating said first and second memory spaces, respectively inside and outside the reserved memory zone.
e. defining a specific granularity that is a multiple of said nominal granularity for each allocated memory space.

4. Allocation method according to claim 3, **characterized in that** step (b) consists in:
- defining two memory points (P1, P2) delimiting the reserved memory zone having a size greater than or equal to the determined size of said first memory space defined in step (a).

5. Allocation method according to claim 3, **characterized in that** step (b) consists in:
- defining a border point (PF) cutting the non volatile memory into two delimiting first and second reserved memory zones (ZR, ZR2) each having as size greater than or equal to, respectively, the determined sizes (TEC, TED) of said first and second memory spaces defined in step (a); and
**in that** step (c) consists in:
- allocating said first and second memory spaces inside, respectively, said first and second reserved memory zones.

6. Allocation method according to any of claims 3 to 5, **characterized in that** it includes an additional step of:
d - allocating at least a third additional memory space (ECS or EDS) for containing said machine code or data, in an unallocated zone of said at least one reserved memory zone.

7. Allocation method according to any of claims 3 to 6, said programmable allocation means enabling a dynamic allocation, **characterized in that** it includes a preliminary step of:
dynamically determining the memory size necessary to contain the machine code and the data.

## Patentansprüche

1. Integrierte Schaltung, insbesondere für Chipkarten, mit einer Zentraleinheit (1), einem nichtflüchtigen Speicher (9), der Maschinencode und Daten enthalten kann, und einer Speichersteuereinheit (8), wobei die Speichersteuereinheit programmierbare Zuweisungsmittel (10) enthält, um wenigstens einen ersten Raum (9a) und einen zweiten Raum (9b) des nichtflüchtigen Speichers, die definiert sind, um den Maschinencode bzw. die Daten zu enthalten, zuzuweisen, **dadurch gekennzeichnet, dass** der nichtflüchtige Speicher (9) in eine bestimmte Anzahl von Speicherblöcken gleicher Größe zerlegbar ist, die eine Nenngranularität des Speichers definierten, und dass die programmierbaren Mittel (10) außerdem ermöglichen, für den ersten Raum (9a) und den zweiten Raum (9b) des Speichers verschiedene Granularitäten, die ein Vielfaches der Nenngranularität sind, zu definieren.

2. Integrierte Schaltung nach Anspruch 1, **dadurch gekennzeichnet**, das die programmierbaren Zuweisungsmittel (10) ermöglichen, den ersten Raum (9a) und den zweiten Raum (9b) des nichtflüchtigen Speichers (9) in Reaktion auf eine dynamische Definition dieses ersten und dieses zweiten Raums dynamisch zuzuweisen, um den Maschinencode und die Daten zu enthalten.

3. Zuweisungsverfahren für einen nichtflüchtigen Speicher einer integrierten Schaltung nach Anspruch 1, wobei das Verfahren die Schritte umfasst, die darin bestehen:
a- einen ersten und einen zweiten Speicherraum (EC, ED) zu definierten, die dazu bestimmt sind, den Code bzw. die Daten zu enthalten oder umgekehrt, wobei jeder eine bestimmte Speichergröße besitzt;
b- wenigstens eine reservierte Speicherzone (ZR) zu begrenzen, die eine Größe besitzt, die größer oder gleich der bestimmten Speichergröße (TEC oder TED) des ersten Speicherraums ist;
c- den ersten und den zweiten Speicherraum innerhalb bzw. außerhalb der reservierten Speicherzone zuzuweisen,
**dadurch gekennzeichnet, dass** der nichtflüchtige Speicher eine bestimmte Nenrigrariularität besitzt und dass es den zusätzlichen Schritt umfasst, der darin besteht:
e- eine geeignete Granularität, die ein Vielfaches der Nenngranularität ist, für jeden zugewiesenen Speicherraum zu definieren.

4. Zuweisungsverfahren nach Anspruch 3, **dadurch gekennzeichnet, dass** der Schritt (b) darin besteht:
- zwei Speicherpunkte (P1, P2) zu definieren, die die reservierte Speicherzone begrenzen, die eine Größe besitzt, die größer oder gleich der bestimmten Größe des im Schritt (a) definierten ersten Speicherraums ist.

5. Zuweisungsverfahren nach Anspruch 3, **dadurch gekennzeichnet, dass** der Schritt (b) darin besteht:
- einen Grenzpunkt (PF) zu definieren, der den nichtflüchtigen Speicher in zwei Teile unterteilt, um eine erste und eine zweite reservierte Speicherzone (ZR1, ZR2) zu begrenzen, die jeweils eine Größe besitzen, die größer oder gleich den jeweiligen bestimmten Größen (TEC, TED) des ersten bzw. des zweiten Speicherraums, die in Schritt (a) definiert werden, ist; und dass der Schritt (c) darin besteht:
- den ersten und den zweiten Speicherraum jeweils innerhalb der ersten bzw. der zweiten reservierten Speicherzone zuzuweisen.

6. Zuweisungsverfahren nach einem der Ansprüche 3 bis 5, **dadurch gekennzeichnet, dass** es einen zusätzlichen Schritt umfasst, der darin besteht:
d- wenigstens einen dritten zusätzlichen Speicherraum (ECK oder EDS), um Maschinencode oder Daten zu enthalten, in einer nicht zugewiesenen Zone der wenigstens einen reservierten Speicherzone zuzuweisen.

7. Zuweisungsverfahren nach einem der Ansprüche 3 bis 6, wobei die programmierbaren Zuweisungsmittel eine dynamische Zuweisung ermöglichen, **dadurch gekennzeichnet, dass** es einen vorherigen Schritt umfasst, der darin besteht:
die Speichergröße, die notwendig ist, um den Maschinencode und die Daten zu enthalten, dynamisch zu bestimmen.
